# EUROPEAN PATENT APPLICATION

(11) **EP 2 743 119 A2**
(43) Date of publication of application: **18.06.2014**
(21) Application number: 13196606.1
(22) Date of filing: 11.12.2013
(51) Int. Cl.: B60L 11/18

(54) **Lock device, lock device controller, and electronic key system**

(30) Priority: 13.12.2012 JP 2012272491
(71) Applicant: KABUSHIKI KAISHA TOKAI RIKA DENKI SEISAKUSHO, Niwa-gun, Aichi 480-0195 (JP)
(72) Inventor: Morita, Keiji, Niwa-gun,, Aichi 480-0195 (JP)
(74) Representative: TBK

(57) **Abstract**

A lock device is arranged in a vehicle (1) including an inlet (34) and an operation switch (57b). The vehicle is configured to perform a predetermined control operation corresponding to the operation switch (57b) when the condition that verification of an authentic electronic key (80) through wireless communication has been accomplished and the condition that a normal operation of the operation switch (57b) has been performed are both satisfied. The lock device includes a lock mechanism (32; 33) that locks a locking subject (10; 36) related with the inlet. A controller (11) controls the lock mechanism to switch the locking subject between a lock state and an unlock state when the condition that the verification of the authentic electronic key has been accomplished and the condition that a special operation of the operation switch (57b) has been performed are both satisfied.

## Description

The present invention relates to a lock device for restricting removal of a power plug from an inlet of a vehicle or restricting access of the power plug to the inlet.

Battery-powered electric vehicles are environment-friendly and have become popular. An electric vehicle includes an inlet connectable to a power plug extending from, for example, a household commercial power supply. The power plug is connected to the inlet in order to supply power from the commercial power supply to the vehicle and charge the vehicle battery.

When charging the battery, to prevent unauthorized removal of the power plug from the vehicle and prevent theft of the power plug, a plug lock device may be used to lock the power plug to the inlet and restrict unauthorized removal of the power plug. For example, the plug lock device includes an LF antenna. The plug lock device transmits a request signal from the LF antenna to the surrounding of the inlet. When a request signal is received from an electronic key, wireless communication is performed between the electronic key and the vehicle. After the electronic key is verified through wireless communication, when an unlock switch arranged near the inlet is operated, the power plug is unlocked (refer to, for example, Japanese Laid-Open Patent Publication No. 2011-244590). Thus, only the user, who is carrying the authentic electronic key, may unlock the power plug and remove the power plug from the inlet.

The plug lock device described in the '590 publication has a complicated structure due to the unlock switch physically arranged near the inlet.

It is an object of the present invention to provide a lock device having a simple structure.

One aspect of the present invention is a lock device arranged in a vehicle including an inlet and an operation switch. The vehicle is configured to perform a predetermined control operation corresponding to the operation switch when the condition that verification of an authentic electronic key through wireless communication has been accomplished and the condition that a normal operation of the operation switch has been performed are both satisfied. The lock device includes a lock mechanism that locks a locking subject related with the inlet. A controller controls the lock mechanism to switch the locking subject between a lock state and an unlock state when the condition that the verification of the authentic electronic key has been accomplished and the condition that a special operation of the operation switch has been performed are both satisfied.

An aspect of the present invention is a lock device controller for controlling a lock mechanism that locks a locking subject to restrict removal of a power plug from a charging inlet of a vehicle or to restrict access of the power plug to the charging inlet. The lock device controller is configured to receive a normal request signal and a special request signal from a vehicle switch located at a position separated from the charging inlet; when the normal request signal is provided to the lock device controller from the vehicle switch, perform electronic key verification through wireless communication between the vehicle and the electronic key and then provide a normal control signal in accordance with the normal request signal to a vehicle component other than the lock mechanism; and when the special request signal is provided to the lock device controller from the vehicle switch, perform the electronic key verification and then provide a drive signal to the lock mechanism to lock or unlock the locking subject.

Further aspect of the present invention is an electronic key system including an electronic key that performs wireless communication; a door lock device that locks vehicle doors; a lock mechanism that locks a locking subject to restrict removal of a power plug from a charging inlet of a vehicle or to restrict access of the power plug to the charging inlet; and a controller coupled to the door lock device and the lock mechanism to control the door lock device and the lock mechanism. The controller is configured to receive a normal request signal and a special request signal from a vehicle switch located at a position separated from the charging inlet, when the normal request signal is provided to the controller from the vehicle switch, perform electronic key verification through wireless communication between the vehicle and the electronic key and then provide a normal control signal in accordance with the normal request signal to the door lock device, and when the special request signal is provided to the controller from the vehicle switch, perform the electronic key verification and then provide a drive signal to the lock mechanism to lock or unlock the locking subject.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a block diagram of a vehicle and an electronic key in one embodiment;
Fig. 2A is a schematic diagram showing a transmission area of a request signal in one embodiment;
Fig. 2B is a partially enlarged view of Fig. 2A; and
Fig. 3 is a flowchart of the processing performed by a controller in one embodiment.

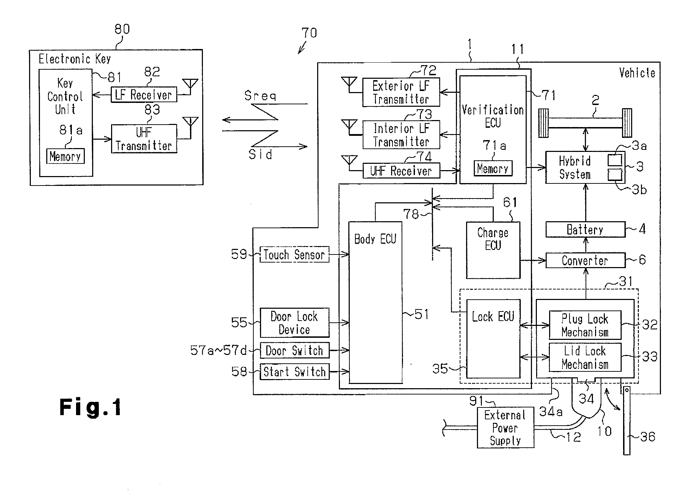

A lock device according to one embodiment of the present invention will now be described with reference to Figs. 1 to 3.

Referring to Fig. 1, a hybrid electric vehicle 1 performs wireless communication with an electronic key 80 to permit or perform the locking and unlocking of vehicle doors and the activation of the power plug lock mechanism.

The electronic key 80 includes a key control unit 81, an LF receiver 82, and a UHF transmitter 83. The key control unit 81 includes a non-volatile memory 81 a that stores a key ID code unique to the electronic key 80. The key control unit 81 receives a request signal S_{req}, which is transmitted through wireless communication on the low frequency (LF) band, from the vehicle 1 with the LF receiver 82, generates a key ID code signal S_{id} including the key ID code stored in the memory 81 a on the ultrahigh frequency (UHF) band, and transmits through wireless communication the key ID code signal S_{id} to the vehicle 1 from the UHF transmitter 83.

A controller 11 is installed in the vehicle 1. The controller 11 includes a verification electronic control unit (ECU) 71, a charge ECU 61, a body ECU 51, and a lock ECU 35. The ECUs 35, 51, 61, and 71 are communicable with one another through an in-vehicle local area network (LAN) 78.

The vehicle 1 includes a hybrid vehicle power train system (hybrid system) 3, a battery 4, and a plug lock device 31. The hybrid system 3 uses the power of an engine 3a and the power of a motor 3b, which are vehicle drive sources, to drive the drive wheels 2 of the vehicle 1. The battery 4 supplies electric power to the motor 3b. The plug lock device 31 locks a power plug 10, which is used to charge the battery 4.

An inlet 34 is arranged in a side wall of the vehicle 1 (e.g., behind rear right vehicle door). The power plug 10 is connected to the inlet 34. The inlet 34 is arranged in a power port 34a formed in the side wall of the vehicle 1. A lid 36 closes the power port 34a and hides the inlet 34. When the lid 36 is closed, a lid lock mechanism 33 locks the lid 36. When, for example, a lid open lever (not shown) arranged near the driver seat is operated, the lid lock mechanism 33 opens the lid 36. When the lid 36 opens, the inlet 34 is exposed.

When the lid 36 is open, the power plug 10 is connectable to the inlet 34. When the power plug 10 is connected to the inlet 34, the inlet 34 and a converter 6 connects the power plug 10 to the battery 4. A charge cable 12 supplies the power plug 10 with electric power from an external power supply 91. Accordingly, when the power plug 10 is connected to the inlet 34, the power plug 10 can supply the converter 6 with AC power from the external power supply 91 via the inlet 34. The converter 6 converts AC power from the power plug 10 to DC power and supplies the battery 4 with DC power. The charge ECU 61 controls the converter 6 to charge the battery 4.

The body ECU 51 is connected to a door lock device 55, door switches 57a to 57d, and a start switch 58.

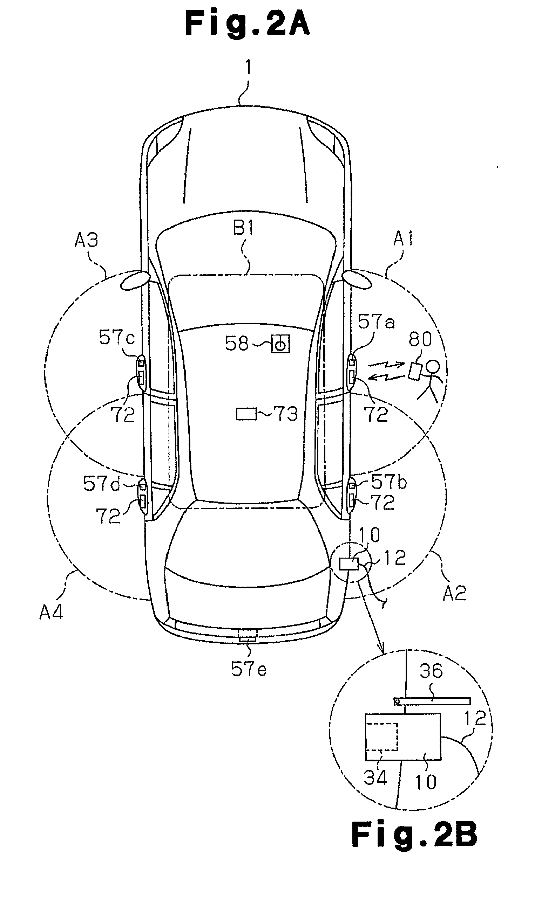

As shown in Fig. 2A, the door switches 57a to 57d are arranged on outer door handles of the vehicle doors, respectively. When pushed, each of the door switches 57a to 57d provides an operation signal to the body ECU 51. For example, the door switch 57a is arranged on the front right door (driver door), the door switch 57b is arranged on the rear right door, the door switch 57c is arranged on the front left door, and the door switch 57d is arranged on the rear left door.

As shown in Fig. 1, based on the operation signal received from one of the door switches 57a to 57d, the body ECU 51 determines which one of the door switches 57a to 57d was operated and how it was operated. More specifically, a normal operation, which is a short push of a door switch 57a to 57d, and a special operation, which is a long push of a door switch 57a to 57d, may be performed. A long push is the pushing of a door switch 57a to 57d over a predetermined time or longer. The body ECU 51 holds a threshold indicating the predetermined time or a reference value. Each of the door switches 57a to 57d is an example of an operation switch. Each of the door switches 57a to 57d may be a button-type switch.

The start switch 58 is arranged in the passenger compartment near the driver seat. When pushed, the start switch 58 provides an operation signal to the body ECU 51.

The verification ECU 71 includes a memory 71 a storing the key ID code of the registered electronic key 80. The verification ECU 71 is connected to an exterior LF transmitter 72, an interior LF transmitter 73, and a UHF receiver 74.

Referring to Fig. 2A, the exterior LF transmitter 72 is arranged in each outer door handle to transmit a wireless signal on the LF band to the surrounding of the vehicle 1.

The interior LF transmitter 73 is arranged in the passenger compartment to transmit a wireless signal on the LF band in the passenger compartment. The UHF receiver 74 receives wireless signals on the UHF band from inside and outside the vehicle 1.

When one of the door switches 57a to 57d is short-pushed, the verification ECU 71 intermittently transmits request signals S_{req} to exterior communication areas A1 to A4 formed around the vehicle 1 from the corresponding exterior LF transmitter 72. For example, the exterior communication areas A1 to A4 are semispherical as shown in Fig. 2A. When the door switch 57a of the driver door, for example, is short-pushed, the verification ECU 71 transmits a request signal S_{req} to the exterior communication area A1, which is formed about the door handle on the driver door.

When a long pushing (special operation) of the door switch 57d is performed, the verification ECU 71 transmits a request signal S_{req} to the exterior communication area A2, which is formed about the rear right door handle, in the same manner as when the door switch 57d is short-pushed.

The verification ECU 71 receives through the UHF receiver 74 a key ID code signal S_{id} that is returned from the electronic key 80 in response to a request signal S_{req} triggered by a short push of one of the door switches 57a to 57d. Then, the verification ECU 71 performs ID verification (door lock exterior verification) with the key ID code in the received key ID code signal S_{id} and the key ID code registered to the memory 71a. When the verification ECU 71 indicates accomplishment of the exterior verification, the body ECU 51 provides the door lock device 55 with a normal control signal, which may be a door lock signal or a door unlock signal, to lock or unlock the vehicle doors.

When a vehicle door opens after the exterior verification is accomplished and the vehicle doors are unlocked, the verification ECU 71 determines that the driver has entered the vehicle 1 and then transmits a request signal S_{req} from the interior LF transmitter 73. The interior LF transmitter 73 forms an interior communication area B1 about the interior LF transmitter 73. The verification ECU 71 transmits the request signal S_{req} to the interior communication area B1 through the interior LF transmitter 73.

When the verification ECU 71 receives a key ID code signal S_{id} from the electronic key 80 through the UHF receiver 74, the verification ECU 71 performs ID verification (interior verification) with the key ID code registered in the memory 71 a and the key ID code in the received key ID code signal S_{id}. Under a situation in which interior verification is accomplished, when the start switch 58 is operated, the verification ECU 71 activates the hybrid system 3 and permits driving of the vehicle 1.

In the example shown in Figs. 2A and 2B, the inlet 34 is arranged in the rear right side of the vehicle 1, that is, behind the rear right door. The door switch 57b is closest to the inlet 34.

As shown in Fig. 1, the inlet 34 includes the plug lock mechanism 32 that locks the power plug 10 to the inlet 34. Under the control of the charge ECU 61, the battery 4 may be charged through the power plug 10 connected to the inlet 34.

The verification ECU 71 receives through the UHF receiver 74 a key ID code signal S_{id} returned from the electronic key 80 in response to a request signal S_{req} triggered by a long push of the door switch 57b. Then, the verification ECU 71 performs exterior verification as described above. This exterior verification is a plug lock exterior verification.

When identifying accomplishment of the plug lock exterior verification, the lock ECU 35 controls the plug lock mechanism 32 to switch the power plug 10 between a lock state and an unlock state. That is, the power plug 10 that is in a lock state is switched into an unlock state. The power plug 10 in an unlock state is removable from the inlet 34. The lock ECU 35 is a part of the plug lock device 31. In this example, the power plug 10 inserted in the inlet 34 is a locking subject. The plug lock mechanism 32 is one example of an inlet lock mechanism.

The operation signal generated by the door switch 57b when a normal operation (short push) is performed is an example of a normal request signal that may be a door lock request signal or a door unlock request signal. The operation signal generated by the door switch 57b when a special operation (long push) is performed is an example of a special request signal that may be a plug lock mechanism drive request signal.

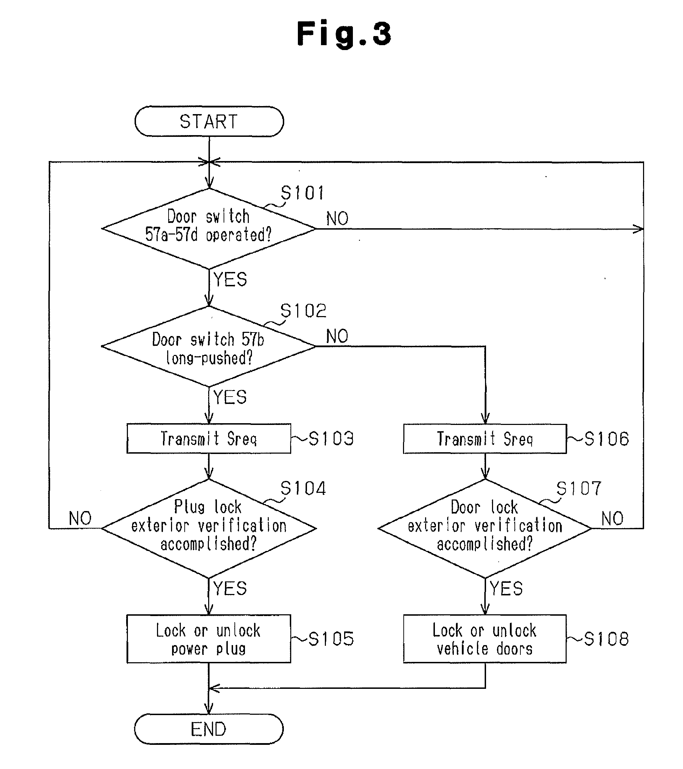

The flowchart of Fig. 3 will now be described. The flowchart briefly illustrates a process performed cooperatively by one or more of the ECUs 35, 51, 61, and 71 forming the controller 11. In the illustrated example, based on the opening and closing history and present state of the vehicle doors and the state of the engine, when the controller 11 determines that there is a high probability of the user who is carrying the electronic key 80 standing outside the vehicle 1, the controller 11 repeats the process of Fig. 3.

The controller 11 waits for an operation of the door switches 57a to 57d (NO in S101). When detecting an operation of the door switches 57a to 57d (YES in S101), the controller 11 checks whether or not the operation is a long push of the door switch 57b (S102).

When determining that the door switch 57b has been long-pushed (YES in S102), the controller 11 transmits a request signal S_{req} through wireless communication to perform electronic key verification (S103). The controller 11 then checks whether or not the electronic key verification, which is a plug lock exterior verification, is accomplished (S104). When determining that the plug lock exterior verification is accomplished (YES in S104), the controller 11 drives the plug lock mechanism 32 to switch the lock state of the power plug 10 (S105). When determining that the plug lock exterior verification is failed (NO in S104), the control device S101 returns to step S101.

For example, when the power plug 10 is in the lock state, the user carrying the electronic key 80 can switch the power plug 10 from the lock state to the unlock state by long-pushing the door switch 57b of the rear right door.

If the door switch 57b is not long-pushed and the controller 11 determines, for example, that one of the door switches 57a to 57d is short-pushed (NO in S102), the controller 11 transmits a request signal S_{req} through wireless communication to perform electronic key verification (S106). The controller 11 then checks whether or not the electronic key verification, which is a door lock exterior verification, is accomplished (S107). When determining that the door lock exterior verification is accomplished (YES in S107), the controller 11 drives the door lock device 55 to switch the lock-unlock state of the vehicle doors (S108). When determining that the door lock exterior verification is failed (NO in S107), the controller 11 returns to step S101.

The controller 11 includes computer-readable instructions to be executed by the controller 11. In some embodiments, the instructions may be stored in a computer-readable storage device, such as a magnetic disk or optical disk, coupled to or accessed by or included in the controller 11. One or more of the verification ECU 71, the charge ECU 61, the body ECU 51 and the lock ECU 35 may function as a lock device controller.

The present embodiment has the advantages described below.
(1) By performing long-pushing (special operation) on the door switch 57b for an electronic key system 70, the plug lock device 31, and ultimately the power plug 10 connected to the inlet 34, are switched between a lock state that restricts connection and removal of the power plug 10 to and from the inlet 34 and an unlock state that permits connection and removal of the power plug 10 to and from the inlet 34. This allows the user to use the door switch 57b, which is for locking and unlocking the vehicle doors, when locking and unlocking the power plug 10. Since a dedicated switch corresponding to the plug lock mechanism 32 does not have to be arranged in the plug lock device 31, the structure of the plug lock device 31 may be simplified.
(2) The user may switch the plug lock device 31 between a lock state and an unlock state by performing a special operation on the door switch 57b, which is closest to the inlet 34. This allows the user to easily check whether or not the special operation has successfully switched the state of the plug lock device 31.
(3) The exterior LF transmitter 72, which transmits a wireless signal of the electronic key system 70, is used for the verification for permitting the switching of the lock state of the power plug 10 (plug lock exterior verification). Since a dedicated LF transmitter for the plug lock exterior verification does not have to be arranged in the plug lock device 31, the structure of the plug lock device 31 may be simplified.

It should be apparent to those skilled in the art that the present invention may be embodied in many other specific forms without departing from the spirit or scope of the invention. Particularly, it should be understood that the present invention may be embodied in the following forms.

In the above embodiment, the lock state of the power plug 10 is switched in response to a special operation performed on the door switch 57b. Instead, the controller 11 may activate the lid lock mechanism 33 to switch the lid 36 between a lock state and an unlock state in response to the special operation. The lid 36 cannot be opened when locked and can be opened when unlocked. For example, the lock ECU 35 may provide the lid lock mechanism 33 with a drive signal to switch the lid 36 between a lock state and an unlock state. In some embodiments, when the conditions of transponder verification or the like are satisfied, the controller 11 activates the lid lock mechanism 33 and switches the lid 36 between closed and open states. In this example, the lid 36 corresponds to a locking subject. The lid lock mechanism 33 is one example of an inlet lock mechanism.

In the above embodiment, the special operation is a long push of the door switch 57b. Instead, the special operation may be short pushes performed a number of times on the door switches 57a to 57d.

In the above embodiment, the controller 11 switches the lock state of the power plug 10 when the door switch 57b is long-pushed. Instead, the state of the power plug 10 may be switched when a long push is performed on other door switches 57a, 57c and 57d. For example, the controller 11 may switch the lock state of the power plug 10 when detecting a long push on the door switch 57a of the driver door. In this modification, the operation switch for switching the lock state of the power plug 10, i.e., the door switch 57a, may be arranged at a position close to where a fuel lid lever is located in a conventional vehicle. Thus, a user accustomed to the structure of a conventional vehicle may switch the lock state of the power plug 10 without being confused. This configuration may be employed especially in vehicles that do not include the door switches 57b and 57d on the rear doors.

As shown in Fig. 2A, in some examples, a door switch 57e and an exterior LF transmitter 72 may be arranged in a door handle of a back door. The controller 11 may transmit a request signal S_{req} to the surrounding of the back door from the exterior LF transmitter 72 of the back door. In this case, the user may lock or unlock the power plug 10 or the lid 36 by performing a special operation on the door switch 57e of the back door, which is relatively close to the inlet 34. For example, the power plug 10 may be stored in the luggage compartment. In this case, the user may open the back door to remove the power plug 10 from the luggage compartment and then perform a special operation on the door switch 57e of the back door to open the lid 36. Thus, the user may smoothly carry out a sequence of tasks from the removal of the power plug 10 to the connection of the power plug 10 to the inlet 34.

Referring to the broken lines in Fig. 1, in the above embodiment, a touch sensor 59 may be arranged in each door handle. When the controller 11 recognizes with a touch sensor 59 that the user has touched a door handle after the door lock exterior verification is accomplished, the controller 11 drives the door lock device 55 to unlock the vehicle doors. In addition, when any of the door switches 57a to 57d is short-pushed after the door lock exterior verification is accomplished, the controller 11 drives the door lock device 55 to lock the vehicle doors.

In this modification, the special operation may be successive operations of touch sensors 59 arranged in different doors or of the door switches 57a to 57d. For example, the special operation may be successive operations on the door switch 57a of the driver door and the door switch 57b of the rear right door in a predetermined time. In this case, the user can successively operate the door switches 57a and 57b while approaching the inlet 34 after leaving the passenger compartment. Thus, the user can easily perform the special operation.

In the above embodiment, the inlet 34 (including the lid 36 and the lock mechanisms 32 and 33) is arranged in the right rear side of the vehicle body but may be arranged at other locations, such as the left rear side or front portion of the vehicle body. The one of the door switches 57a to 57d closest to the inlet 34 differs in accordance with the location of the inlet 34.

The special operation may be a special operation of the start switch 58. For example, the controller 11 may switch the lock state of the power plug 10 when the interior verification is accomplished and a special operation, which may be a long push or a plurality of short pushes, is performed on the start switch 58. In this modification, the operation switch for switching the lock state of the power plug 10, i.e., the start switch 58, is located close to a position where a fuel lid lever is located in a conventional vehicle. Thus, a user accustomed to the structure of a conventional vehicle may switch the lock state of the power plug 10 without being confused.

The controller 11 may switch the lock state of the power plug 10 when a special operation is performed on the start switch 58 or one of the door switches 57a to 57d.

In the above embodiment, a request signal S_{req} is transmitted when one of the door switches 57a to 57d is operated. Instead, a request signal S_{req} may be transmitted to the exterior communication areas A1 to A4 in predetermined cycles. In this case, when detecting a short push on the door switches 57a to 57d in the situation in which the door lock exterior verification has been accomplished, the controller 11 locks or unlocks the vehicle doors. When detecting a long push on the door switch 57b in the situation in which the plug lock exterior verification has been accomplished, the controller 11 switches the lock state of the power plug 10.

In the above embodiment, the controller 11 can switch the power plug 10 between a lock state and an unlock state based on a special operation of the door switch 57b. Instead, the controller 11 may be configured to only switch the power plug 10 from a lock state to an unlock state, but not from an unlock state to a lock stated.

In the above embodiment, the control contents of the ECUs 35, 51, 61, and 71 forming the controller 11 may be changed.

In the above embodiment, the exterior LF transmitter 72 for the electronic key system 70 is used for communication related to the switching of the lock state of the power plug 10. However, an LF transmitter dedicated for plug locking may be arranged in the vehicle 1 near the inlet 34. The LF transmitter transmits a request signal S_{req} around the inlet 34. Otherwise, the configuration may be the same as the above embodiments.

In the above embodiments, the vehicle 1 may be an electric vehicle instead of a hybrid electric vehicle.

In the above embodiment, the special operation for switching the power plug 10 from a lock state to an unlock state and the special operation for switching the power plug 10 from an unlock state to a lock state are the same. However, the two special operations may differ from each other. For example, each special operation may be a plurality of operations on any of the door switches 57a to 57d, and the power plug 10 may be locked or unlocked depending on the number of operations.

In the above embodiment, the lock state of the power plug 10 is switched by performing a special operation on the door switch 57b. However, after identifying a special operation performed on the door switch 57b, the controller 11 may periodically transmit request signals S_{req} to the surrounding of the vehicle 1 to determine whether or not exterior verification is accomplished. The controller 11 may switch the lock state of the power plug 10 when exterior verification is no longer accomplished.

The above description is intended to be illustrative, and not restrictive. For example, the above-described examples (or one or more aspects thereof) may be used in combination with each other. Inventive subject matter may lie in less than all features of a particular disclosed embodiment and may be modified within the scope and equivalence of the appended claims.

A lock device is arranged in a vehicle (1) including an inlet (34) and an operation switch (57b). The vehicle is configured to perform a predetermined control operation corresponding to the operation switch (57b) when the condition that verification of an authentic electronic key (80) through wireless communication has been accomplished and the condition that a normal operation of the operation switch (57b) has been performed are both satisfied. The lock device includes a lock mechanism (32; 33) that locks a locking subject (10; 36) related with the inlet. A controller (11) controls the lock mechanism to switch the locking subject between a lock state and an unlock state when the condition that the verification of the authentic electronic key has been accomplished and the condition that a special operation of the operation switch (57b) has been performed are both satisfied.

## Claims

1. A lock device arranged in a vehicle including an inlet and an operation switch,
wherein the vehicle is configured to perform a predetermined control operation corresponding to the operation switch when the condition that verification of an authentic electronic key through wireless communication has been accomplished and the condition that a normal operation of the operation switch has been performed are both satisfied, the lock device comprising:
a lock mechanism that locks a locking subject related with the inlet; and
a controller that controls the lock mechanism to switch the locking subject between a lock state and an unlock state when the condition that the verification of the authentic electronic key has been accomplished and the condition that a special operation of the operation switch has been performed are both satisfied.

2. The lock device according to claim 1, wherein the operation switch on which the special operation is performed is a door switch arranged in one of a plurality of outer door handles of the vehicle that is closest to the inlet.

3. The lock device according to any one of the preceding claims, wherein the operation switch on which the special operation is performed is a driver door switch arranged in a driver outer door handle.

4. The lock device according to any one of the preceding claims, wherein the operation switch is a start switch that is arranged in a passenger compartment and operated to activate a vehicle drive source.

5. The lock device according to any one of the preceding claims, wherein the operation switch is a back door switch arranged in a back door handle.

6. The lock device according to any one of the preceding claims, wherein the locking subject is a power plug connected to the inlet.

7. The lock device according to any one of the preceding claims, wherein the locking subject is a lid that hides the inlet.

8. The lock device according to any one of the preceding claims, wherein the predetermined control operation is activation of an engine or a motor of the vehicle or locking or unlocking of a vehicle door.

9. A lock device controller for controlling an inlet lock mechanism that locks a locking subject to restrict removal of a power plug from a charging inlet of a vehicle or to restrict access of the power plug to the charging inlet, the lock device controller being configured to:
receive a normal request signal and a special request signal from a vehicle switch located at a position separated from the charging inlet;
when the normal request signal is provided to the lock device controller from the vehicle switch, perform electronic key verification through wireless communication between the vehicle and the electronic key and then provide a normal control signal in accordance with the normal request signal to a vehicle component other than the inlet lock mechanism; and
when the special request signal is provided to the lock device controller from the vehicle switch, perform the electronic key verification and then provide a drive signal to the inlet lock mechanism to lock or unlock the locking subject.

10. The lock device controller according to claim 9, wherein
the lock device controller is configured to receive the normal request signal and the special request signal from the vehicle switch that is selected from the group consisting of
an outer door switch arranged in one of a plurality of outer door handles of the vehicle that is closest to the inlet,
an outer driver door switch arranged in a driver door handle,
a back door switch arranged in a back door handle, and
a vehicle drive source start switch arranged in a passenger compartment.

11. An electronic key system comprising:
an electronic key that performs wireless communication;
a door lock device that locks vehicle doors;
an inlet lock mechanism that locks a locking subject to restrict removal of a power plug from a charging inlet of a vehicle or to restrict access of the power plug to the charging inlet; and
a controller coupled to the door lock device and the inlet lock mechanism to control the door lock device and the inlet lock mechanism, wherein
the controller is configured to:
receive a normal request signal and a special request signal from a vehicle switch located at a position separated from the charging inlet,
when the normal request signal is provided to the controller from the vehicle switch, perform electronic key verification through wireless communication between the vehicle and the electronic key and then provide a normal control signal in accordance with the normal request signal to the door lock device, and
when the special request signal is provided to the controller from the vehicle switch, perform the electronic key verification and then provide a drive signal to the inlet lock mechanism to lock or unlock the locking subject.
